# EUROPEAN PATENT SPECIFICATION

(11) **EP 4 026 679 B1**
(45) Date of publication and mention of the grant of the patent: **15.10.2025**
(21) Application number: 20860657.4
(22) Date of filing: 27.08.2020
(51) Int. Cl.: B29C 45/00, H01L 23/36, C08L 83/04, C08K 3/22, B01F 27/95, H01L 23/00, B29C 48/44, B29C 48/385, B29C 48/05, B29C 43/14

(54) **METHOD FOR PREPARING THERMALLY CONDUCTIVE INTERFACE MATERIAL**
VERFAHREN ZUR HERSTELLUNG VON THERMISCH LEITFÄHIGEM GRENZFLÄCHENMATERIAL
PROCÉDÉ DE PRÉPARATION D'UN MATÉRIAU D'INTERFACE CONDUCTEUR DE LA CHALEUR

(30) Priority: 05.09.2019 CN 201910837137
(43) Date of publication of application: 13.07.2022
(73) Proprietor: Shanghai Allied Industrial Co., Ltd., Shanghai 201499 (CN)
(72) Inventor: FAN, Yong, Shanghai 201499 (CN); CHENG, Ya Dong, Shanghai 201499 (CN)
(74) Representative: Schlich
(86) International application number: PCT/CN2020/111614
(87) International publication number: WO 2021/043052

(56) References cited:
- EP-A2- 1 797 155
- CN-A- 103 975 429
- CN-A- 103 975 429
- CN-A- 107 507 776
- CN-A- 107 507 776
- CN-A- 108 912 683
- CN-A- 110 625 877
- JP-A- 2000 345 040
- JP-A- 2000 345 040
- US-A1- 2019 055 443

## Description

### TECHNICAL FIELD

The present invention belongs to the field of heat conducting materials technology, and in particular, to a preparation method of a heat conducting interface material.

### BACKGROUND

With the continuous development of materials science, the application proportion of heat-conducting materials in national defense industry and civil used materials is increasing year by year. Heat-conducting materials with the characteristics of light weight, good mechanical properties, strong electrical insulation and low price have become the future development trend, and have a wide application prospect in today's rapid development of electronic industry. Electronic industrial products, such as LED, microelectronic packaging materials and semiconductor devices, are developing towards miniaturization, lightness and intelligence, so people put forward higher requirements for the heat-conducting property of materials.

Heat-conducting materials used in electronic equipment, such as high heat dispersing materials and electronic packaging materials, often need equipped with the performance of excellent electrical insulation and high breakdown voltage to meet the use requirements. As the volume of miniaturized electronic equipments such as notebook computers and mobile communications continues to decrease and their performance continues to improve, the calorific value of products also increases significantly. The stability and reliability of electronic equipment will be reduced and the service life of products will be shortened with the continuous increase of operating temperature. In order to ensure the efficient and stable operation of electronic equipment, it is an urgent problem to prepare materials with high heat conductivity and appropriate hardness to quickly and effectively export the heat generated inside the equipment. A known document, US2019/055443A1, discloses a thermal conducting sheet including: a binder resin; carbon fibers; and a thermal conducting filler other than the carbon fibers, wherein a mass ratio (carbon fibers/binder resin) of the carbon fibers to the binder resin is less than 1.30, wherein an amount of the thermal conducting filler is from 48% by volume through 70% by volume, and wherein the carbon fibers are oriented in a thickness direction of the thermal conducting sheet. JP2000345040A discloses a method for producing a thermally conductive silicone mold, the method comprising: using the first silicone composition containing a thermal conductive filler, form the core material with multiple rods supported by the frame, and put it in a mold after curing or before curing, or without the mold core material, it acts itself as a mold, is filled with an uncured second silicone composition with or without the thermal conductive filler, and if the mold is used, it is cured before or after deforming, and if necessary, the frame of the above core material should be used, a producing method to make a thermally conductive silicone mold, which is characterized by the removal of an outer wall part that functions as a mold for the core material. CN103975429A provides a thermal conductive sheet with good thermal conductivity in the direction of thickness. The thermal conductivity sheet contains a thermal conductivity composition, which contains an organosilicone resin, a thermal conductivity filler and a filling material that enables the thermal conductivity filler to be arranged in a specified direction. The thermal conductivity filler is oriented along the thickness direction of the thermal conductivity sheet, and at least contains aluminum nitride as a filling material. CN107507776A discloses a preparation method for a cooling plate, the method comprising: Step 1: Make a plurality of microholes on a metal plate, insert diamond particles into the microholes, and make the diamond particles closely arranged in the microholes; Step 2, in a vacuum environment, heat extrusion of the metal plate, so that the metal plate and the diamond particle compacted and fit, to obtain the cooling plate.

### SUMMARY

In order to solve the above technical problems, a preparation method of a heat conducting interface material is provided by the first aspect of the present invention, comprising the following steps:
S1. stirring and mixing;
S2. orientation process: putting a mixed material obtained in the step S1 into a hydraulic injection extruder, spitting the material out through a needle nozzle and arranging the material neatly in a container in a strip shape, and after stacking the material to1/2-1/4 of a height of the container, vibrating the material in a vibrating compactor and repeatedly performing stacking 2-4 times;
S3. vacuum compacting;
S4. curing;
S5. slicing.

As a preferred technical solution, the stirring and mixing in step S1 comprises the following steps:
(1): adding 0.1-0.5 part of alkenyl-containing siloxane into 13-20 parts of liquid silica gel, and performing planetary stirring for 1-10min;
(2): adding 27-35 parts of metal powder, 7-13 parts of metal oxide and 11-20 parts of ceramic material into the mixture obtained in the step (1), performing planetary vacuumizing and stirring for 5-20min;
(3): adding 10-15 parts of carbon material into the mixture obtained in the step (2), performing planetary vacuumizing and stirring for 1-30min;
(4): adding 10-15 parts of carbon material into the mixture obtained in the step (3), performing planetary vacuumizing and stirring for 1-30min.

As a preferred technical solution, the caliber of the needle nozzle in step S2 is 1-4 mm.

As a preferred technical solution, the caliber of the needle nozzle in step S2 is 2.5 mm.

As a preferred technical solution, the vacuum compacting in step S3 comprises the following steps: putting the container in the step S2 into a vacuum drying oven for vacuumizing and then performing vacuum relieving after 1-5 minutes, and vibrating the material with a vibrating compactor, which is repeated at least once; after pressing a heavy object onto the container for pressing, putting the container along with the heavy object into a vacuum drying oven for vacuumizing and then performing vacuum relieving after 1-5 minutes, and repeating these processes at least once.

As a preferred technical solution, the vacuum compacting in step S3 comprises the following steps: putting the container in the step S2 into a vacuum drying oven for vacuumizing and then performing vacuum relieving after 1-5 minutes, vibrating the material with a vibrating compactor, and repeating these processes at least twice; after pressing a heavy object onto the container for pressing, putting the container along with the heavy object into a vacuum drying oven for vacuumizing and then performing vacuum relieving after 1-5 minutes, and repeating these processes at least twice.

As a preferred technical solution, wherein in step S4, pressing the heavy object onto the container in the step (3) comprises putting the container in an oven at 100-150 °C for 30-90min.

As a preferred technical solution, the metal powder in the step S1 comprises at least one of a copper powder, an aluminum powder, a silver powder, an iron powder, a zinc powder, a nickel powder and a tin powder.

As a preferred technical solution, the metal powder is a powder having a spherical structure.

The interface material prepared by the preparation method is provided by the second aspect of the present invention.

Beneficial effects: the heat conducting interface material obtained by the preparation method of the present invention has excellent heat conducting property and appropriate hardness, and can be well applied to heat dissipation in the field of electronic products.

### DETAILED DESCRIPTION OF EMBODIMENTS

For the purposes of the following detailed description, it should be understood that various alternative variations and step sequences may be adopted in the present invention, unless expressly stated to the contrary. In addition, except in any operating example, or where otherwise indicated, all figures representing quantities of ingredients used in, for example, the descriptions and claims shall be understood to be modified in all cases by the term "about". Therefore, unless indicated to the contrary, the numerical parameters set forth in the following description and the appended claims are approximate values that vary depending on the desired properties to be obtained according to the present invention. At least, it is not intended to limit the application of the equivalence principle to the scope of the claims, and each numerical parameter should at least be interpreted according to the number of reported significant digits and by applying ordinary rounding techniques.

Although the numerical ranges and parameters that illustrate the broad scope of the present invention are approximate values, the numerical values listed in the specific examples are reported as accurately as possible. However, any numerical value inherently includes some errors that must be caused by the standard deviation found in their respective test measurements.

When a range of valuesis disclosed herein, the above range is considered continuous and includes the minimum and maximum values of the range, and each value between such minimum and maximum values. Further, when the range refers to an integer, every integer between the minimum value and the maximum value of the range is included. In addition, when multiple ranges are provided to describe features or characteristics, the ranges may be combined. In other words, unless otherwise indicated, all ranges disclosed herein should be understood to include any and all subranges subsumed therein. For example, the specified range from "1 to 10" should be considered to include any and all subranges between the minimum value 1 and the maximum value 10. Exemplary subranges of range 1 to 10 include, but are not limited to, 1 to 6.1, 3.5 to 7.8, 5.5 to 10, and etc.

In order to solve the above problems, a preparation method of a heat-conducting interface material is provided by the present invention, comprising the following steps:
S1. stirring and mixing;
S2. orientation process: putting a mixed material obtained in the step S1 into a hydraulic injection extruder, spitting the material out through a needle nozzle and arranging the material neatly in a container in a strip shape, and after stacking the material to1/2-1/4 of a height of the container, vibrating the material in a vibrating compactor and repeatedly performing stacking 2-4 times;
S3. vacuum compacting;
S4. curing;
S5. slicing.

### Step S1

According to this application, the heat-conducting interface materials are fully mixed through step-by-step stirring and mixing.

As a preferred implementation, based on parts by weight, the stirring and mixing in the step S1 comprises the following steps:
(1): adding 0.1-0.5 part of alkenyl-containing siloxane into 13-20 parts of liquid silica gel, and performing planetary stirring for 1-10min;
(2): adding 27-35 parts of metal powder, 6-13 parts of metal oxide and 11-20 parts of ceramic material into the mixture obtained in the step (1), performing planetary vacuumizing and stirring for 5-20min;
(3): adding 10-15 parts of carbon material into the mixture obtained in the step (2), performing planetary vacuumizing and stirring for 1-30min;
(4): adding 10-15 parts of carbon material into the mixture obtained in the step (3), performing planetary vacuumizing and stirring for 1-30min;

Wherein, in the step S1, the rotational speed of planetarily stirring is 500-1500 r/min.

Preferably, the stirring and mixing comprises the following steps in parts by weight:
(1): adding 0.32 part of alkenyl-containing siloxane into 15.92 parts of liquid silica gel, and performing planetary stirring for 1-10min;
(2): adding 31.45 parts of metal powder, 10.36 parts of metal oxide and 15.31 parts of ceramic material into the mixture obtained in the step (1), performing planetary vacuumizing and stirring for 5-20min;
(3): adding 13.32 parts of carbon material into the mixture obtained in the step (2), performing planetary vacuumizing and stirring for 1-30min;
(4): adding 13.32 parts of carbon material into the mixture obtained in the step (3), performing planetary vacuumizing and stirring for 1-30min;

The planetary mixer is a new type of high-efficiency mixing and stirring equipment without dead points, which has a unique and novel stirring form. There are two or three multi-layer paddle mixers and 1-2 automatic scrapers in the kettle. While revolving around the axis of the body of the kettle, the mixers rotate at high speed around their own axis at different rotational speeds, so that the materials make complex movements inside the the body of the kettle and are subjected to intense shearing and rubbing, and their efficiency is usually several times that of ordinary mixers.

### (Liquid silica gel)

As an implementation, the liquid silica gel comprises at least one of hydroxyl modified polydimethylsiloxane type silica gel, carboxyl modified polydimethylsiloxane type silica gel and polydimethylsiloxane type silica gel containing silicon hydrogen bonds.

As a preferred implementation, the viscosity of the liquid silica gel is 500-1000 mPa·s.

The viscosity test reference standard of the liquid silica gel refers to ISO3219, and the temperature is 25 degrees Celsius.

In this application, the model of the liquid silica gel is Waker-9212 A/B, which is purchased from wacker, Germany.

### (metal powder)

As an implementation, the metal powder comprises at least one of a copper powder, an aluminum powder, a silver powder, an iron powder, a zinc powder, a nickel powder and a tin powder.

As an implementation, the metal powder is aluminum powder.

As a preferred implementation, the metal powder is a powder having a spherical structure.

The shape and particle size of metal particles affect their distribution in polymer and the way of stacking among particles, thus affecting the ability to construct heat conducting channels inside polymer, and affecting its heat conducting and other properties.

As a preferred implementation, the average particle size of the metal powder is 1-70 microns; preferably, the average particle size of the metal powder is 5-40 microns;
As a preferred implementation, the metal powder consists of metal powder with an average particle size of 1-10 microns and metal powder with an average particle size of 30-50 microns;
Preferably, the weight ratio of the 1-10 micron metal powder to the 30-50 micron metal powder is (0.8-1.2): 1.

Further preferably, the weight ratio of the 5 micron metal powder to the 40 micron metal powder is (0.8-1.2): 1.

More preferably, the weight ratio of the 5 micron metal powder to the 40 micron metal powder is 1: 1.

### (Metal oxide)

The metal oxide described in this application has lower heat conducting property than metal powder, but has good electrical insulation, good wear resistance and high hardness.

As an implementation, the molecular formula of the metal oxide is MₓO_{y}, wherein m is selected from one of Zn, Cu, al, Ag, Ni, Fe and Mg, x is 1-2, and y is 1-3.

As a preferred implementation, the molecular formula of the metal oxide is MₓO_{y}, wherein m is Zn, x is 1, and y is 1.

As a preferred implementation, the metal oxide is spherical structure powder.

Preferably, the average particle size of the metal oxide is 400-800 nm.

More preferably, the average particle size of the metal oxide is 600 nm.

### (Carbon material)

In this application, the carbon material is selected from at least one of carbon fibers, carbon nanotubes, carbon nanowires, graphene and graphene oxide.

As a preferred implementation, the carbon material is carbon fiber.

As a preferred implementation, the average length of the carbon fibers is 50~200 microns.

Preferably, the average length of the carbon fibers is 150 microns.

The carbon fiber described in this application has ultra-high heat conductivity and mechanical strength, and the heat conductivity can reach 700 W/(m • k). The carbon fiber is mainly composed of hexagonal C-atom layer lattice, and covalent bond is the main form of interconnection between C atoms (bond length =0.1421 mn). The stability of each layer structure is mainly maintained by van der Waals force, and the distance between layers is in the range of 0.3360-0.3440 nm. The special microcrystalline graphite structure of the carbon fiber makes it play a great heat dissipating advantage in the heat conduction process.

### (Alkenyl-containing siloxane)

In this application, the metal powder, metal oxide, carbon material, etc. have high heat conducting coefficient, but due to the lack of active groups, the surface energy is low and the compatibility with liquid silica gel is poor, which will affect the heat conductivity, hardness and other properties of the heat conducting material. In this application, the metal powder, the metal oxide and the carbon material are subjected to surface treatment by adding the alkenyl-containing siloxane, so that the compatibility among the metal powder, the metal oxide and the carbon material is increased, and the interfacial adhesion is improved.

As a preferred implementation, the alkenyl-containing siloxane is selected from at least one of 1- vinyl-1,1,3,3,3-pentamethyldisiloxane, 1,3,5-trivinyl-1,1,3,5,5-pentamethyltrisiloxane, vinyltris (dimethylsiloxane) silane, and 1,3-divinyltriethoxydisiloxane, methacryloyloxy pentamethyl disiloxane, vinyl tri (trimethylsiloxy) silane and vinyl trimethoxysilane.

As a preferred implementation, the alkenyl-containing siloxane is vinyl trimethoxysilane.

In this application, the model of the alkenyl-containing siloxane is KH171.

### (Ceramic material)

As an implementation, the ceramic material is selected from one or more of silicon carbide, aluminum nitride, silicon nitride, aluminum silicate and zirconium oxide.

As a preferred implementation, the ceramic material is aluminum nitride.

The Aluminum nitride is a covalent bond compound, has a hexagonal wurtzite structure, is white or off-white, and Al atoms and adjacent N atoms form a divergent (AIN₄) tetrahedron. The theoretical density of AIN is 3.269, Mohs hardness is 7-8, it decomposes at 2200-22500 degrees celsius, and it has good stability and heat shock resistance in high temperature non-oxidizing atmosphere below 2000°C. In addition, the aluminum nitride is not corroded by aluminum, other molten metals and arsenic, and has excellent electrical insulation and dielectric properties.

As a preferred implementation, the aluminum nitride is spherical structure powder.

As a preferred implementation, the average particle size of the aluminum nitride is 0.5-5 microns;
As a preferred implementation, the aluminum nitride consists of aluminum nitride with an average particle size of 0.5-2 microns and aluminum nitride with an average particle size of 4-6 microns;
Preferably, the weight ratio of the 0.5-2 micron aluminum nitride to the 4-6 micron aluminum nitride is (0.9-1.3):1.

Further preferably, the weight ratio of the 1 micron aluminum nitride to the 5 micron aluminum nitride is (0.9-1.3): 1.

More preferably, the weight ratio of the 1 micron aluminum nitride to the 5 micron aluminum nitride is 1.1:1.

### S2. orientation process:

putting a mixed material obtained in the step S1 into a hydraulic injection extruder, spitting the material out through a needle nozzle and arranging the material neatly in a container in a strip shape, and after stacking the material to1/2-1/4 of a height of the container, vibrating the material in a vibrating compactor and repeatedly performing stacking 2-4 times;
As a preferred implementation, the caliber of the needle nozzle is 1-4 mm;
Preferably, the caliber of the needle nozzle is 2.5 mm.

As a preferred implementation, the vibration time is 30-60 minutes, the vibration frequency is 1-10 Hz, and the amplitude is 2-8 mm.

Preferably, the vibration time is 40 minutes, the vibration frequency is 5 Hz, and the amplitude is 5 mm.

As a preferred implementation, after stacking the material to 1/3 of a height of the container, vibrating the material in a vibrating compactor and repeatedly performing stacking 3 times.

Wherein, the "stacking the material to 1/2-1/4 of a height of the container" refers to stacking to 1/2-1/4 of a height of the container.

In this application, the dimensions of length, width and height of the container are 250 mm, 150 mm and 150 mm respectively.

### S3. vacuum compacting

As an implementation, the vacuum compacting in step S3 comprises the following steps: putting the container in the step S2 into a vacuum drying oven for vacuumizing and then performing vacuum relieving after 1-5 minutes, and vibrating the material with a vibrating compactor, which is repeated at least once; after pressing a heavy object onto the container for pressing, putting the container along with the heavy object into a vacuum drying oven for vacuumizing and then performing vacuum relieving after 1-5 minutes, and repeating these processes at least once;
As an implementation, the vacuum compacting in step S3 comprises the following steps: putting the container in the step S2 into a vacuum drying oven for vacuumizing and then performing vacuum relieving after 1-5 minutes, and vibrating the material with a vibrating compactor, which is repeated at least once; after pressing a heavy object onto the container for pressing, putting the container along with the heavy object into a vacuum drying oven for vacuumizing and then performing vacuum relieving after 1-5 minutes, and repeating these processes at least once;
As a preferred implementation, the specific operation of the vacuum compaction is as follows: putting the container in step S2 into a vacuum drying oven for vacuumizing to be ≤ -0.098 MPa, and then performing vacuum relieving after 1-5 minutes, and vibrating the material with a vibrating compactor; once again putting into a vacuum drying oven for vacuumizing to be ≤ -0.098 MPa, and then performing vacuum relieving after 1-5 minutes, and vibrating the material with a vibrating compactor; after pressing a heavy object onto the container for pressing, putting the container along with the heavy object into a vacuum drying oven for vacuumizing to be ≤-0.098 MPa, and then performing vacuum relieving after 1-5 minutes, after pressing a heavy object onto the container for pressing, putting the container along with the heavy object into a vacuum drying oven for vacuumizing to be ≤-0.098 MPa, and then performing vacuum relieving after 1-5 minutes;
In this application, the force exerted by the weight on the container is 100-500 kgf. 1 kilogram-force [kgf] equals to 9.80665 Newton [N].

Preferably, the force exerted by the weight on the container is 300 kgf.

As a preferred implementation, the vibration time is 30-60 minutes, the vibration frequency is 1-10 Hz, and the amplitude is 2-8 mm.

### S4. curing

As an implementation, pressing the heavy object onto the container in the step (3) comprises putting the container in an oven at 100-150 °C for 30-90min.

As a preferred implementation, pressing the heavy objects onto the container in the step (3) comprises putting the container in an oven at 120°C for 60min.

In this application, the force exerted by the weight on the container is 100-500 kgf.

Preferably, the force exerted by the weight on the container is 300 kgf.

### S5. slicing

cooling the material obtained in step S4 to room temperature, taking out, and slicing into sheets with specified thickness.

As a preferred implementation, the preparation method of a heat-conducting interface material, the method comprising the following steps:
S1. stirring and mixing
   adding alkenyl-containing siloxane into liquid silica gel, and performing planetary stirring for 1-10min;
   adding metal powder, metal oxide and ceramic material into the mixture obtained in the step (1), performing planetary vacuumizing and stirring for 5-20min;
   adding half of the carbon material into the mixture obtained in the step (2), performing planetary vacuumizing and stirring for 1-30min;
   adding the remaining carbon material into the mixture obtained in the step (3), performing planetary vacuumizing and stirring for 1-30min;
S2. orientation process
   putting a mixed material obtained in the step S1 into a hydraulic injection extruder, spitting the material out through a needle nozzle and arranging the material neatly in a container in a strip shape, and after stacking the material to1/2-1/4 of a height of the container, vibrating the material in a vibrating compactor and repeatedly performing stacking 2-4 times.
S3. vacuum compacting
   putting the container in the step S2 into a vacuum drying oven for vacuumizing to be ≤ -0.098 MPa and then performing vacuum relieving after 1-5 minutes, and vibrating the material with a vibrating compactor, which is repeated at least once; after pressing a heavy object onto the container for pressing, putting the container along with the heavy object into a vacuum drying oven for vacuumizing to be ≤ -0.098 MPa and then performing vacuum relieving after 1-5 minutes, and repeating these processes at least once;
S4. curing at high temperature
   pressing the heavy object onto the container in the step (3) comprises putting the container in an oven at 100-150 °C for 30-90min.

In this application, the force exerted by the weight on the container is 100-500 kgf.

Preferably, the force exerted by the weight on the container is 300 kgf.

### S5. slicing:

cooling the material obtained in step S4 to room temperature, taking out, and slicing into sheets with specified thickness.

As a most preferred implementation, the preparation method of a heat-conducting interface material, the method comprising the following steps:
S1. stirring and mixing
   adding alkenyl-containing siloxane into liquid silica gel, and performing planetary stirring for 1-10min;
   adding metal powder, metal oxide and ceramic material into the mixture obtained in the step S1, performing planetary vacuumizing and stirring for 5-20min; and then shoveling the material on the paddle and the pot wall, continuously vacuumizing and stirring for 1-10min, and again shoveling the material on the paddle and the pot wall, and continuously vacuumizing and stirring for 1-10min;
   adding half of the carbon material into the mixture obtained in the step S2, performing planetary vacuumizing and stirring for 1-10min; and then shoveling the material on the paddle and the pot wall, continuously vacuumizing and stirring for 1-10min, and again shoveling the material on the paddle and the pot wall, and continuously vacuumizing and stirring for 1-10min;
   adding the remaining carbon material into the mixture obtained in the step S3, performing planetary vacuumizing and stirring for 1-10min;and then shoveling the material on the paddle and the pot wall, continuously vacuumizing and stirring for 1-10min, and again shoveling the material on the paddle and the pot wall, and continuously vacuumizing and stirring for 1-10min, and again shoveling the material on the paddle and the pot wall, and continuously vacuumizing and stirring for 1-10min;
S2. orientation process
   putting a mixed material obtained in the step S1 into a hydraulic injection extruder, spitting the material out through a needle nozzle, the caliber of which is 2.5 mm, and arranging the material neatly in a container in a strip shape, and after stacking the material to1/2-1/4 of a height of the container, vibrating the material in a vibrating compactor and repeatedly performing stacking 2-4 times.
S3. vacuum compacting
   putting the container in step S3 into a vacuum drying oven for vacuumizing to be ≤ -0.098 MPa, and then performing vacuum relieving after 1-5 minutes, and vibrating the material with a vibrating compactor; once again putting into a vacuum drying oven for vacuumizing to be ≤ -0.098 MPa, and then performing vacuum relieving after 1-5 minutes, and vibrating the material with a vibrating compactor; after pressing a heavy object onto the container for pressing, putting the container along with the heavy object into a vacuum drying oven for vacuumizing to be ≤-0.098 MPa, and then performing vacuum relieving after 1-5 minutes, after pressing a heavy object onto the container for pressing, putting the container along with the heavy object into a vacuum drying oven for vacuumizing to be ≤-0.098 MPa, and then performing vacuum relieving after 1-5 minutes.
S4. Curing at high temperature
   pressing the heavy object onto the container in the step S4 comprises putting the container in an oven at 100-150 °C for 30-90min.
S5. Slicing
   cooling the material obtained in step S4 to room temperature, taking out, and slicing into sheets with specified thickness.

As a preferred implementation, the thickness of the heat-conducting interface material is 0.3-10 mm, and preferably, the thickness of the heat-conducting interface material is 0.5-5 mm.

In this application, metal powder, metal oxide, carbon material, etc. are added into the liquid silica gel to achieve the purpose of improving the heat conducting property of the material, and the heat-conducting material with directional orientation of carbon material is obtained through the processes of step-by-step mixing, directional orientation, etc.; fillers with different particle sizes are distributed in silica gel to form a heat conduction chain, which is equivalent to forming multiple "parallel circuits" in the heat conducting material system, and the heat flow passes through the multiple "parallel circuits", thus improving the heat conducting performance. In addition, due to the existence of vinyl trimethoxysilane, the problems of solution properties, incompatible surface energy of fillers and high viscosity of mixture of liquid silicone rubber are improved, and the hardness range of the obtained interface material is 30~50 ShoreOO, which has good processability and is very suitable for heat dissipating in various electronic product fields.

The heat conducting interface material prepared by the preparation method is provided by the second aspect of the present invention.

An application of the heat conducting interface material is provided by the third aspect of the present invention, which is used for heat dissipating of electronic products.

The electronic products can be listed as watches, smart phones, telephones, televisions, video players (VCD, SVCD, DVD), video recorders, camcorders, radios, tape recorders, combined speakers, laser record players (CD), computers, game machines, etc.

The present invention is described in detail by embodiments below. It is essential to point out herein that the following embodiments are merely intended to further illustrate the present invention and are not construed as limitation to the scope of protection of the present invention, and that some non-essential modifications and adaptations made by those skilled in the art according to the above content of the present invention still fall within the scope of protection of the present invention.

In addition, unless otherwise stated, all the raw materials used are commercially available.

### Embodiments

### Embodiment 1

A preparation method of a heat-conducting interface material, based on parts by weight, the method comprising the following steps:
S1. stirring and mixing
   adding 0.32 part of alkenyl-containing siloxane into 15.92 parts of liquid silica gel, and performing planetary stirring for 5min;
   adding 31.45 parts of metal powder, 10.36 parts of metal oxide and 15.31 parts of ceramic material into the mixture obtained in the step (1), performing planetary vacuumizing and stirring for 10min, and then shoveling the material on the paddle and the pot wall, continuously vacuumizing and stirring for 5min, and again shoveling the material on the paddle and the pot wall, and continuously vacuumizing and stirring for 5min;
   adding 13.32 parts of the carbon material into the mixture obtained in the step (2), performing planetary vacuumizing and stirring for 5min; and then shoveling the material on the paddle and the pot wall, continuously vacuumizing and stirring for 5min, and again shoveling the material on the paddle and the pot wall, and continuously vacuumizing and stirring for 5min;
   adding 13.32 parts of carbon material into the mixture obtained in the step (3), performing planetary vacuumizing and stirring for 5min;and then shoveling the material on the paddle and the pot wall, continuously vacuumizing and stirring for 5min, and again shoveling the material on the paddle and the pot wall, and continuously vacuumizing and stirring for 5min;
S2. orientation process
   putting the mixed material obtained in step S1 into a hydraulic injection extruder, spitting the material out through a needle nozzle, the caliber of which is 2.5 mm, and arranging the material neatly in a container in a strip shape, and after stacking the material to 1/3 of a height of the container, vibrating the material in a vibrating compactor and the vibration time is 40 minutes, the vibration frequency is 5 Hz, and the amplitude is 5 mm; and continue after stacking the material to 2/3 of a height of the container, vibrating the material in a vibrating compactor and the vibration time is 40 minutes, the vibration frequency is 5 Hz, and the amplitude is 5 mm; and continue after stacking the material to 3/3 of a height of the container, vibrating the material in a vibrating compactor and the vibration time is 40 minutes, the vibration frequency is 5 Hz, and the amplitude is 5 mm.

The dimensions of length, width and height of the container are 250 mm, 150 mm and 150 mm respectively.

### S3. Vacuum compacting

putting the container in step S3 into a vacuum drying oven for vacuumizing to be -0.098 MPa, and then performing vacuum relieving after 2 minutes, and vibrating the material with a vibrating compactor and the vibration time is 40 minutes, the vibration frequency is 5 Hz, and the amplitude is 5 mm; once again putting into a vacuum drying oven for vacuumizing to be -0.098 MPa, and then performing vacuum relieving after 2 minutes, and vibrating the material with a vibrating compactor, and the vibration time is 40 minutes, the vibration frequency is 5 Hz, and the amplitude is 5 mm; after pressing a heavy object onto the container for pressing, putting the container along with the heavy object into a vacuum drying oven for vacuumizing to be -0.098 MPa and then performing vacuum relieving after 2 minutes; after pressing a heavy object onto the container for pressing, putting the container along with the heavy object into a vacuum drying oven for vacuumizing to be -0.098 MPa and then performing vacuum relieving after 2 minutes.

The force exerted by the weight on the container is 300 kgf.

### S4. Curing at high temperature

pressing the heavy object onto the container in the step S4 comprises putting the container in an oven at 120 °C for 60min. The force exerted by the weight on the container is 300 kgf.

### S5. Slicing

cooling the material obtained in step S4 to room temperature, taking out, and slicing into sheets with specified thickness.

Wherein, in the step S1, the rotational speed of performing planetary stirring is 800 r/min.

Wherein, the model of the liquid silica gel is Waker-9212 A/B, which is purchased from Wacker, Germany.

The metal powder consists of aluminum powder with an average particle size of 5 microns and aluminum powder with an average particle size of 40 microns; the weight ratio of the 5 micron aluminum powder to the 40 micron aluminum powder is 1:1.

The molecular formula of the metal oxide is MₓO_{y}, wherein m is Zn, x is 1, and y is 1; the average particle size of the metal oxide is 600 nm.

The carbon material is carbon fiber, and the average length of the carbon fiber is 150 microns.

The model of the alkenyl-containing siloxane is KH171.

The ceramic material consists of aluminum nitride with an average particle size of 1 micron and aluminum nitride with an average particle size of 5 microns, and the weight ratio of the aluminum nitride with 1 micron to the aluminum nitride with 5 microns is 1.1:1.

### Embodiment 2

The preparation method of a heat-conducting interface material, based on parts by weight, the method comprising the following steps:
S1. stirring and mixing
   adding 0.1 part of alkenyl-containing siloxane into 13 parts of liquid silica gel, and performing planetary stirring for 1min;
   adding 27 parts of metal powder, 7 parts of metal oxide and 11 parts of ceramic material into the mixture obtained in the step (1), performing planetary vacuumizing and stirring for 5min, and then shoveling the material on the paddle and the pot wall, continuously vacuumizing and stirring for 1min, and again shoveling the material on the paddle and the pot wall, and continuously vacuumizing and stirring for 1min;
   adding 10 parts of the carbon material into the mixture obtained in the step (2), performing planetary vacuumizing and stirring for 1min; and then shoveling the material on the paddle and the pot wall, continuously vacuumizing and stirring for 1min, and again shoveling the material on the paddle and the pot wall, and continuously vacuumizing and stirring for 1min;
   adding 10 parts of carbon material into the mixture obtained in the step (3), performing planetary vacuumizing and stirring for 1min;and then shoveling the material on the paddle and the pot wall, continuously vacuumizing and stirring for 1min, and again shoveling the material on the paddle and the pot wall, and continuously vacuumizing and stirring for 1min;
S2. orientation process
   putting a mixed material obtained in the step S1 into a hydraulic injection extruder, spitting the material out through a needle nozzle, the caliber of which is 2.5 mm, and arranging the material neatly in a container in a strip shape, and after stacking the material to 1/2 of a height of the container, vibrating the material in a vibrating compactor and the vibration time is 40 minutes, the vibration frequency is 5 Hz, and the amplitude is 5 mm; and continue after stacking the material to 2/2 of a height of the container, vibrating the material in a vibrating compactor and the vibration time is 40 minutes, the vibration frequency is 5 Hz, and the amplitude is 5 mm.

The dimensions of length, width and height of the container are 250 mm, 150 mm and 150 mm respectively.

### S3. Vacuum compacting

putting the container in step S3 into a vacuum drying oven for vacuumizing to be -0.098 MPa, and then performing vacuum relieving after 1 minute, and vibrating the material with a vibrating compactor and the vibration time is 40 minutes, the vibration frequency is 5 Hz, and the amplitude is 5 mm; once again putting into a vacuum drying oven for vacuumizing to be -0.098 MPa, and then performing vacuum relieving after 1 minute, and vibrating the material with a vibrating compactor, and the vibration time is 40 minutes, the vibration frequency is 5 Hz, and the amplitude is 5 mm; after pressing a heavy object onto the container for pressing, putting the container along with the heavy object into a vacuum drying oven for vacuumizing to be -0.098 MPa and then performing vacuum relieving after 1 minute; after pressing a heavy object onto the container for pressing, putting the container along with the heavy object into a vacuum drying oven for vacuumizing to be -0.098 MPa and then performing vacuum relieving after 1 minute. The force exerted by the weight on the container is 100 kgf.

### S4. Curing at high temperature

pressing the heavy object onto the container in the step S4 comprises putting the container in an oven at 100°C for 90min.

The force exerted by the weight on the container is 100 kgf.

### S5. Slicing

cooling the material obtained in step S4 to room temperature, taking out, and slicing into sheets with specified thickness.

Wherein, in the step S1, the rotational speed of performing planetary stirring is 800 r/min.

Wherein, the specific components of metal powder, metal oxide, ceramic material, liquid silica gel, alkenyl-containing siloxane and carbon material in step S1 are the same as those in embodiment 1.

### Embodiment 3

The preparation method of a heat-conducting interface material, based on parts by weight, the method comprising the following steps:
S1. stirring and mixing
   adding 0.5 part of alkenyl-containing siloxane into 20 parts of liquid silica gel, and performing planetary stirring for 10min;
   adding 35 parts of metal powder, 13 parts of metal oxide and 20 parts of ceramic material into the mixture obtained in the step (1), performing planetary vacuumizing and stirring for 10min, and then shoveling the material on the paddle and the pot wall, continuously vacuumizing and stirring for 10min, and again shoveling the material on the paddle and the pot wall, and continuously vacuumizing and stirring for 10min;
   adding 15 parts of the carbon material into the mixture obtained in the step (2), performing planetary vacuumizing and stirring for 10min; and then shoveling the material on the paddle and the pot wall, continuously vacuumizing and stirring for 10min, and again shoveling the material on the paddle and the pot wall, and continuously vacuumizing and stirring for 10min;
   adding 15 parts of carbon material into the mixture obtained in the step (3), performing planetary vacuumizing and stirring for 10min;and then shoveling the material on the paddle and the pot wall, continuously vacuumizing and stirring for 10min, and again shoveling the material on the paddle and the pot wall, and continuously vacuumizing and stirring for 10min;
S2. orientation process
   putting the mixed material obtained in step S1 into a hydraulic injection extruder, spitting the material out through a needle nozzle, the caliber of which is 2.5 mm, and arranging the material neatly in a container in a strip shape, and after stacking the material to 1/4 of a height of the container, vibrating the material in a vibrating compactor and the vibration time is 40 minutes, the vibration frequency is 5 Hz, and the amplitude is 5 mm; and continue after stacking the material to 2/4 of a height of the container, vibrating the material in a vibrating compactor and the vibration time is 40 minutes, the vibration frequency is 5 Hz, and the amplitude is 5 mm; and continue after stacking the material to 3/4 of a height of the container, vibrating the material in a vibrating compactor and the vibration time is 40 minutes, the vibration frequency is 5 Hz, and the amplitude is 5 mm; and continue after stacking the material to 4/4 of a height of the container, vibrating the material in a vibrating compactor and the vibration time is 40 minutes, the vibration frequency is 5 Hz, and the amplitude is 5 mm.

The dimensions of length, width and height of the container are 250 mm, 150 mm and 150 mm respectively.

### S3. Vacuum compacting

putting the container in step S3 into a vacuum drying oven for vacuumizing to be -0.098 MPa, and then performing vacuum relieving after 5 minutes, and vibrating the material with a vibrating compactor and the vibration time is 40 minutes, the vibration frequency is 5 Hz, and the amplitude is 5 mm; once again putting into a vacuum drying oven for vacuumizing to be -0.098 MPa, and then performing vacuum relieving after 5 minutes, and vibrating the material with a vibrating compactor, and the vibration time is 40 minutes, the vibration frequency is 5 Hz, and the amplitude is 5 mm; after pressing a heavy object onto the container for pressing, putting the container along with the heavy object into a vacuum drying oven for vacuumizing to be -0.098 MPa and then performing vacuum relieving after 5 minutes; after pressing a heavy object onto the container for pressing, putting the container along with the heavy object into a vacuum drying oven for vacuumizing to be -0.098 MPa and then performing vacuum relieving after 5 minutes. The force exerted by the weight on the container is 500 kgf.

### S4. Curing at high temperature

pressing the heavy object onto the container in the step S4 comprises putting the container in an oven at 150°C for 30min. The force exerted by the weight on the container is 500 kgf.

### S5. Slicing

cooling the material obtained in step S4 to room temperature, taking out, and slicing into sheets with specified thickness.

Wherein, in the step S1, the rotational speed of performing planetary stirring is 800 r/min.

Wherein, the specific components of metal powder, metal oxide, ceramic material, liquid silica gel, alkenyl-containing siloxane and carbon material in step S1 are the same as those in embodiment 1.

### Embodiment 4

A preparation method of a heat-conducting interface material, the specific steps of which are the same as those of embodiment 1, is different in that,
S1. stirring and mixing
adding 0.32 part of alkenyl-containing siloxane, 31.45 parts of metal powder, 10.36 parts of metal oxide and 15.31 parts of ceramic material into 15.92 parts of liquid silica gel, performing planetary vacuumizing and stirring for 25min, and then shoveling the material on the paddle and the pot wall, continuously vacuumizing and stirring for 5min, and again shoveling the material on the paddle and the pot wall, and continuously vacuumizing and stirring for 5min;
adding 13.32 parts of the carbon material into the mixture obtained in the step (1), performing planetary vacuumizing and stirring for 5min; and then shoveling the material on the paddle and the pot wall, continuously vacuumizing and stirring for 5min, and again shoveling the material on the paddle and the pot wall, and continuously vacuumizing and stirring for 5min;
adding 13.32 parts of carbon material into the mixture obtained in the step (2), performing planetary vacuumizing and stirring for 5min; and then shoveling the material on the paddle and the pot wall, continuously vacuumizing and stirring for 5min, and again shoveling the material on the paddle and the pot wall, and continuously vacuumizing and stirring for 5min;

Wherein, the specific components of metal powder, metal oxide, ceramic material, liquid silica gel, alkenyl-containing siloxane and carbon material in step S1 are the same as those in embodiment 1.

### Embodiment 5

The specific steps of the preparation method of the heat-conducting interface material are the same as those of embodiment 1, with the difference that S1, during stirring and mixing:
adding 0.32 part of alkenyl-containing siloxane into 15.92 parts of liquid silica gel, and performing planetary stirring for 5min;
adding 31.45 parts of metal powder, 10.36 parts of metal oxide and 15.31 parts of ceramic material into the mixture obtained in the step (1), performing planetary vacuumizing and stirring for 10min, and then shoveling the material on the paddle and the pot wall, continuously vacuumizing and stirring for 5min, and again shoveling the material on the paddle and the pot wall, and continuously vacuumizing and stirring for 5min;
adding 26.64 parts of the carbon material into the mixture obtained in the step (2), performing planetary vacuumizing and stirring for 5min; and then shoveling the material on the paddle and the pot wall, continuously vacuumizing and stirring for 5min, and again shoveling the material on the paddle and the pot wall, and continuously vacuumizing and stirring for 5min.

Wherein, the specific components of metal powder, metal oxide, ceramic material, liquid silica gel, alkenyl-containing siloxane and carbon material in step S1 are the same as those in embodiment 1.

### Embodiment 6

The specific steps of the preparation method of the heat-conducting interface material are the same as those of embodiment 1, with the difference that S2, during orientation process,
putting the mixed material obtained in step S1 into a hydraulic injection extruder, spitting the material out through a needle nozzle, the caliber of which is 2.5 mm, and arranging the material neatly in a container in a strip shape, vibrating the material in a vibrating compactor and the vibration time is 40 minutes, the vibration frequency is 5 Hz, and the amplitude is 5 mm.

Wherein, the specific components of metal powder, metal oxide, ceramic material, liquid silica gel, alkenyl-containing siloxane and carbon material in step S1 are the same as those in embodiment 1.

### Embodiment 7

A preparation method of a heat-conducting interface material, the specific steps of which are the same as those of embodiment 1, is different in that,
S3. Vacuum compacting
putting the container in step S2 into a vacuum drying oven for vacuumizing to be-0.098 MPa and discharging the container after 2 minutes, and vibration compacting the material in a vibrating compactor;
Wherein, the specific components of metal powder, metal oxide, ceramic material, liquid silica gel, alkenyl-containing siloxane and carbon material in step S1 are the same as those in embodiment 1.

### Performance test

Heat conducting coefficient: refer to ASTMD5470 for testing method, and test the heat conducting coefficient of the heat conducting materials along the fiber orientation direction, in w/(m· k).

Hardness: use Shore OO hardness tester to test, put the heat-conducting interface material under the needle-in apparatus of the hardness tester, and when the equipment sounds "tick", the data will be stable, and record the data (which is the average value of five different positions), in Shore OO. See Table 1 for details.

**Table 1**

| 238] Embodiments | 239] Heat conducting coefficient | 240] Hardness |
|---|---|---|
| 241] Embodiment 1 | 242] 50 | 243] 49 |
| 244] Embodiment 2 | 245] 47 | 246] 47 |
| 247] Embodiment 3 | 248] 49 | 249] 49 |
| 250] Embodiment 4 | 251] 12 | 252] 33 |
| 253] Embodiment 5 | 254] 8 | 255] 39 |
| 256] Embodiment 6 | 257] 23 | 258] 38 |
| 259] Embodiment 7 | 260] 27 | 261] 31 |

The above is only a preferred embodiment of the present invention, and it is not meant to limit the present invention in other forms, and any person familiar with this profession may use the technical content disclosed above to change it or change it into an equivalent embodiment with equivalent changes. However, any simple modifications, equivalent changes and modifications made to the above embodiments according to the technical essence of the present invention without departing from the technical content of the present invention still belong to the protection scope of the technical scheme of the present invention.

## Claims

1. A preparation method of a heat-conducting interface material, the method comprises the following steps:
S1. stirring and mixing;
S2. an orientation process comprising: putting a mixed material obtained in the step S1 into a hydraulic injection extruder, spitting the material out through a needle nozzle and arranging the material neatly in a container in a strip shape, and after stacking the material to1/2-1/4 of a height of the container, vibrating the material in a vibrating compactor and repeatedly performing stacking 2-4 times;
S3. vacuum compacting;
S4. curing;
S5. slicing,
**characterised in that** based on parts by weight, the stirring and mixing in the step S1 comprises the following steps:
(1): adding 0.1-0.5 part of alkenyl-containing siloxane into 13-20 parts of liquid silica gel, and performing planetary stirring for 1-10 min;
(2): adding 27-35 parts of metal powder, 7-13 parts of metal oxide and 11-20 parts of ceramic material into the mixture obtained in the step (1), performing planetary vacuumizing and stirring for 5-20min;
(3): adding 10-15 parts of carbon material into the mixture obtained in the step (2), performing planetary vacuumizing and stirring for 1-30min;
(4): adding 10-15 parts of carbon material into the mixture obtained in the step (3), performing planetary vacuumizing and stirring for 1-30min.

2. The preparation method according to claim 1, **characterized in that**, the caliber of the needle nozzle in step S2 is 1-4 mm.

3. The preparation method according to claim 2, **characterized in that**, the caliber of the needle nozzle in step S2 is 2.5 mm.

4. The preparation method according to claim 1, **characterized in that**, the vacuum compacting in the step S3 comprises the following steps: putting the container in the step S2 into a vacuum drying oven for vacuumizing and then performing vacuum relieving after 1-5 minutes, and vibrating the material with a vibrating compactor, which is repeated at least once; after pressing a heavy object onto the container for pressing, putting the container along with the heavy object into a vacuum drying oven for vacuumizing and then performing vacuum relieving after 1-5 minutes, and repeating these processes at least once.

5. The preparation method according to claim 4, **characterized in that**, the vacuum compacting in the step S3 comprises the following steps: putting the container in the step S2 into a vacuum drying oven for vacuumizing and then performing vacuum relieving after 1-5 minutes, vibrating the material with a vibrating compactor, and repeating these processes at least twice; after pressing a heavy object onto the container for pressing, putting the container along with the heavy object into a vacuum drying oven for vacuumizing and then performing vacuum relieving after 1-5 minutes, and repeating these processes at least twice.

6. The preparation method according to claim 1, **characterized in that**, in step S4, pressing the heavy object onto the container in the step (3) comprises putting the container in an oven at 100-150 °C for 30-90 min.

7. The preparation method according to claim 1, **characterized in that**, the metal powder in the step S1 comprises at least one of a copper powder, an aluminum powder, a silver powder, an iron powder, a zinc powder, a nickel powder and a tin powder.

8. The preparation method according to claim 7, **characterized in that**, the metal powder is a powder having a spherical structure.

9. An interface material prepared by the preparation method according to any one of claims 1 to 8.

## Patentansprüche

1. Herstellungsverfahren für ein wärmeleitendes Grenzflächenmaterial,
umfassend die folgenden Schritte:
S1. Rühren und Mischen;
S2. Orientierungsprozess: Einbringen eines im Schritt S1 erhaltenen gemischten Materials in einen hydraulischen Injektions-Extruder, Ausstoßen des Materials durch eine Nadeldüse und ordentliches Anordnen des Materials in einem Behälter in Streifenform, und nach dem Stapeln des Materials auf 1/2 bis 1/4 der Höhe des Behälters, Vibrieren des Materials in einem Vibrationsverdichter und wiederholtes Durchführen des Stapelns 2-4 Mal;
S3. Vakuumverdichten;
S4. Aushärten;
S5. Schneiden,
**dadurch gekennzeichnet, dass**
basierend auf Gewichtsanteilen, das Rühren und Mischen im Schritt S1 die folgenden Schritte umfasst:
(1): Zugeben von 0,1-0,5 Teilen alkenylhaltigem Siloxan zu 13-20 Teilen Flüssigsilikon und Durchführen von planetarischem Rühren für 1-10 Minuten;
(2): Zugeben von 27-35 Teilen Metallpulver, 7-13 Teilen Metalloxid und 11-20 Teilen keramischem Material zu der in Schritt (1) erhaltenen Mischung, Durchführen von planetarem Evakuieren und Rühren für 5-20 Minuten;
(3): Zugeben von 10-15 Teilen Kohlenstoffmaterial zu der in Schritt (2) erhaltenen Mischung, Durchführen von planetarem Evakuieren und Rühren für 1-30 Minuten;
(4): Zugeben von 10-15 Teilen Kohlenstoffmaterial zu der in Schritt (3) erhaltenen Mischung, Durchführen von planetarem Evakuieren und Rühren für 1-30 Minuten.

2. Herstellungsverfahren nach Anspruch 1, **dadurch gekennzeichnet, dass** der Durchmesser der Nadeldüse in Schritt S2 1-4 mm beträgt.

3. Herstellungsverfahren nach Anspruch 2, **dadurch gekennzeichnet, dass** der Durchmesser der Nadeldüse in Schritt S2 2,5 mm beträgt.

4. Herstellungsverfahren nach Anspruch 1, **dadurch gekennzeichnet, dass** das Vakuumverdichten in Schritt S3 folgende Schritte umfasst: Einbringen des Behälters aus Schritt S2 in einen Vakuumtrockenschrank zum Evakuieren und dann Durchführen von Vakuumentlasten nach 1-5 Minuten, und Vibrieren des Materials mit einem Vibrationsverdichter, wobei dieser Vorgang mindestens einmal wiederholt wird; nach dem Auflegen eines schweren Gegenstandes auf den Behälter zum Pressen, Einbringen des Behälters zusammen mit dem schweren Gegenstand in einen Vakuumtrockenschrank zum Evakuieren und dann Durchführen von Vakuumentlasten nach 1-5 Minuten, wobei diese Vorgänge mindestens einmal wiederholt werden.

5. Herstellungsverfahren nach Anspruch 4, **dadurch gekennzeichnet, dass** das Vakuumverdichten in Schritt S3 folgende Schritte umfasst: Einbringen des Behälters aus Schritt S2 in einen Vakuumtrockenschrank zum Evakuieren und dann Durchführen von Vakuumentlasten nach 1-5 Minuten, Vibrieren des Materials mit einem Vibrationsverdichter und Wiederholen dieser Vorgänge mindestens zweimal; nach dem Auflegen eines schweren Gegenstandes auf den Behälter zum Pressen, Einbringen des Behälters zusammen mit dem schweren Gegenstand in einen Vakuumtrockenschrank zum Evakuieren und dann Durchführen von Vakuumentlasten nach 1-5 Minuten, und Wiederholen dieser Vorgänge mindestens zweimal.

6. Herstellungsverfahren nach Anspruch 1, **dadurch gekennzeichnet, dass** in Schritt S4 das Auflegen des schweren Gegenstands auf den Behälter im Schritt (3) das Einbringen des Behälters in einen Ofen bei 100-150°Cfür 30-90 Minuten umfasst.

7. Herstellungsverfahren nach Anspruch 1, **dadurch gekennzeichnet, dass** das Metallpulver in Schritt S1 mindestens eines von Kupferpulver, Aluminiumpulver, Silberpulver, Eisenpulver, Zinkpulver, Nickelpulver und Zinnpulver umfasst.

8. Herstellungsverfahren nach Anspruch 7, **dadurch gekennzeichnet, dass** das Metallpulver ein Pulver mit kugelförmiger Struktur ist.

9. Grenzflächenmaterial, hergestellt durch das Herstellungsverfahren nach einem der Ansprüche 1 bis 8.

## Revendications

1. Procédé de préparation d'un matériau d'interface thermoconducteur, le procédé comprenant les étapes suivantes:
S1. agitation et mélange ;
S2. processus d'orientation: mise en place du matériau mélangé obtenu à l'étape S1 dans une extrudeuse à injection hydraulique, éjection du matériau à travers une buse à aiguille et disposition ordonnée du matériau dans un conteneur sous forme de bande, puis empilement du matériau jusqu'à 1/2-1/4 de la hauteur du conteneur, vibration du matériau dans un compacteur vibrant et répétition de l'empilement 2 à 4 fois;
S3. compactage sous vide;
S4. durcissement;
S5. découpage,
**caractérisé en ce que**, sur la base des parties en poids, l'agitation et le mélange à l'étape S1 comprennent les étapes suivantes:
(1): ajouter 0,1 à 0,5 partie de siloxane contenant de l'alcényle dans 13 à 20 parties de gel de silice liquide, et effectuer une agitation planétaire pendant 1 à 10 minutes;
(2): ajouter 27 à 35 parties de poudre métallique, 7 à 13 parties d'oxyde métallique et 11 à 20 parties de matériau céramique au mélange obtenu à l'étape (1), effectuer une mise sous vide planétaire et un brassage pendant 5 à 20 minutes;
(3): ajouter 10 à 15 parties de matériau carboné au mélange obtenu à l'étape (2), effectuer une mise sous vide et un brassage planétaires pendant 1 à 30 minutes;
(4): ajouter 10 à 15 parties de matériau carboné au mélange obtenu à l'étape (3), effectuer une mise sous vide et un brassage planétaires pendant 1 à 30 minutes.

2. Procédé de préparation selon la revendication 1, **caractérisé en ce que** le calibre de la buse à aiguille à l'étape S2 est de 1 à 4 mm.

3. Procédé de préparation selon la revendication 2, **caractérisé en ce que** le calibre de la buse à aiguille à l'étape S2 est de 2,5 mm.

4. Procédé de préparation selon la revendication 1, **caractérisé en ce que** le compactage sous vide à l'étape S3 comprend les étapes suivantes : placer le récipient de l'étape S2 dans un four de séchage sous vide pour le mettre sous vide, puis effectuer une dépressurisation après 1 à 5 minutes, et faire vibrer le matériau à l'aide d'un compacteur vibrant, opération qui est répétée au moins une fois ; après avoir pressé un objet lourd sur le récipient pour le presser, mettre le récipient avec l'objet lourd dans un four de séchage sous vide pour le mettre sous vide, puis effectuer une dépressurisation sous vide après 1 à 5 minutes, et répéter ces processus au moins une fois.

5. Procédé de préparation selon la revendication 4, **caractérisé en ce que** le compactage sous vide à l'étape S3 comprend les étapes suivantes : placer le récipient de l'étape S2 dans un four de séchage sous vide pour le mettre sous vide, puis effectuer une dépressurisation après 1 à 5 minutes, vibrer le matériau à l'aide d'un compacteur vibrant et répéter ces processus au moins deux fois ; après avoir pressé un objet lourd sur le récipient pour le presser, placer le récipient avec l'objet lourd dans un four de séchage sous vide pour le mettre sous vide, puis procéder à une dépressurisation après 1 à 5 minutes, et répéter ces processus au moins deux fois.

6. Procédé de préparation selon la revendication 1, **caractérisé en ce que**, à l'étape S4, le pressage de l'objet lourd sur le récipient à l'étape (3) comprend le placement du récipient dans un four à 100-150 °C pendant 30 à 90 minutes.

7. Procédé de préparation selon la revendication 1, **caractérisé en ce que** la poudre métallique à l'étape S1 comprend au moins l'une parmi une poudre de cuivre, une poudre d'aluminium, une poudre d'argent, une poudre de fer, une poudre de zinc, une poudre de nickel et une poudre d'étain.

8. Procédé de préparation selon la revendication 7, **caractérisé en ce que** la poudre métallique est une poudre ayant une structure sphérique.

9. Matériau d'interface préparé par le procédé de préparation selon l'une quelconque des revendications 1 à 8.
